# EUROPEAN PATENT SPECIFICATION

(11) **EP 1 053 170 B1**
(45) Date of publication and mention of the grant of the patent: **03.04.2002**
(21) Application number: 99901110.9
(22) Date of filing: 20.01.1999
(51) Int. Cl.: B62M 1/04

(54) **BICYCLE OR THE LIKE**
FAHRRAD ODER DERGLEICHEN
BICYCLETTE OU SIMILAIRE

(30) Priority: 21.01.1998 IT FR980001; 23.03.1998 IT FR980004; 22.07.1998 IT FR980009
(43) Date of publication of application: 22.11.2000
(73) Proprietor: ERL Invenzioni S.r.l., 03039 Sora (IT)
(72) Inventor: FARINA, Ernesto, I.03039 Sora (IT)
(74) Representative: Iannone, Carlo Luigi
(86) International application number: IT9900009
(87) International publication number: WO9937528

(56) References cited:
- EP-A- 0 285 858
- FR-A- 837 231
- FR-A- 1 102 611
- US-A- 4 445 701
- US-A- 4 456 276

## Description

The invention relates to bicycles, meaning with the term "bicycle" any apparatus, mobile or fixed, provided with a pedal group operated by the user of the bicycle, as, for instance, bicycles for touring and for racing, tandem, exercise bikes (cyclette), tricycles.

More particularly, the invention relates to bicycles of the above kind provided with an innovative pedal group able to assure high biomechanical efficiency of the user's action, to promote the generation of high power during the operation of the pedal group, to allow the user to assume a posture anatomically favourable for the operation of the pedal group, to warrant a very good balancing of the user's weight and to assure a considerable stability to (mobile) bicycle during motion.

Moreover, the invention relates to bicycles of the above kind provided with an innovative seat able to allow the user to assume a comfortable posture.

Common bicycles presently on the market provide that the pedal group comprises a central shaft, two cranks coupled with the shaft, a pedal coupled with the end of each one of the two cranks and a gear wheel, integrally coupled with the cranks, for transmitting to a chain the motion of the cranks generated by the user through the action of the feet on the pedals. The seat on which the user is sitting during operation of the pedal group is placed at the back of, but substantially in proximity to, the perpendicular to the ground going through the shaft of the pedal group. In the case of mobile bicycles, there are (at least) one front wheel and (at least) one rear wheel having a central hub provided with a freewheeling sprocket to which the chain motion is transmitted in only one way. In the case of fixed bicycles, as cyclette, instead of the wheels, there is (at least) one flywheel, preferably at the back, which offers resistance to the user's action and to which motion is transmitted similarly to the transmission in mobile bicycles.

As it is known by those skilled in the art, the typology and the position of the pedal group and of the seat of the present bicycles force the user to operate the pedal group assuming a substantially sitting or forward bent position that involves some drawbacks.

First of all, the muscular work of the user's lower limbs has a non optimal biomechanical efficiency In fact. this is heavily lowered by the counter-gravity work carried out by the limbs during the pedalling passive phase, by the incomplete extension of the hips, due to the forward position of the pedal group compared to the seat, and by the very low participation of the muscles of the legs, but the quadriceps, in the pedalling active phase.

Moreover, the sitting or forward bent position assumed by the user involves an increased abdominal pressure, known as Valsalva's phenomenon, due to the reduction of the abdominal cavity, which causes a reduced venous and lymphatic drainage, a reduced pulmonary excursion resulting from the lifting of the diaphragm and a constant stress even of the musculature of user's bust and arms which gives rise to a rapid fatigue, emphasised in mobile bicycles by the presence of even small unevenness of the run ground.

It is the object of this invention, therefore, to furnish a bicycle allowing the biomechanical efficiency of the user's action to be optimised.

It is also object of this invention to furnish a bicycle enabling the generation of a high muscular power during the operation of the pedal group in the pedalling active phase.

It is another object of this invention to improve the balancing of the bicyclist's weight.

It is also object of this invention to furnish a (mobile) bicycle having high stability.

It is further object of this invention to allow the user of the bicycle a comfortable and anatomically favourable for the operation of the pedal group.

It is therefore specific object of the present invention a bicycle and like, having a rear wheel or flywheel, and provided with a pedal group comprising a central shaft and a gear wheel integrally coupled each other, a left crank and a right crank, coupled on the two ends of the central shaft, characterised in that a pedal crank is rotatably coupled with each one of said left and right cranks by mechanical means creating a freewheel like mechanism between the crank and the corresponding pedal crank, a pedal being coupled with one end of each one of the two pedal cranks.

Always according to the invention, said rotating coupling mechanical means between the crank and the corresponding pedal crank can comprise a shaped pin. provided with a ring gear and rotatably coupled with the crank or with the pedal crank, said pin coupling with a corresponding shaped hole provided in the crank or in the pedal crank. coupled with the crank or with the pedal crank, said pin coupling with a corresponding shaped hole provided in the crank or in the pedal crank.

It is further therefore specific object of the present invention a bicycle and like, having a rear wheel or flywheel, and provided with a pedal group comprising a central shaft and a gear wheel integrally coupled each other, a left crank and a right crank, characterised in that said left crank and right crank are rotatably coupled with the central shaft by mechanical means creating a freewheel like mechanism between each crank and the central shaft, a pedal being coupled with one end of each one of the two cranks.

Still according to the invention, said rotating coupling mechanical means between each one of the cranks and the central shaft can comprise a gear coupled with the crank, or to the end of the central shaft, and provided with a shaped hole within which the corresponding end of the central shaft, or a corresponding crank pin, is inserted.

Preferably, according to the invention, in a bicycle having one of the above pedal groups, the central shaft of the pedal group, which is placed parallel with respect to rear wheel hub, is provided externally, above, with respect to the circumference of said rear wheel, within an angular range α of ± 30° with respect to the line passing through the contact point between the wheel and the ground and through the hub.

Furthermore according to the invention, the rear wheel or flywheel hub can be coupled with the central shaft of the pedal group by at least a rod.

Always according to the invention, the bicycle can provide at least a further rod connecting the central shaft of the pedal group with the seat supporting rod, said at least a further rod being included within an angular range of ± 40° with respect to a line parallel to the ground and passing through the central shaft of the pedal group.

Still according to the invention, the bicycle can provide at least a further rod connecting the rear wheel or flywheel hub with the lower end of the seat supporting rod, the angle between said at least a further rod and the line perpendicular to the ground and passing through the rear wheel or flywheel hub being between 60 and 120°.

It is further specific object of the present invention a fixed bicycle, provided with a pedal group operating a rear wheel or flywheel, characterised in that it comprises two tanks, suitable to contain liquid, protected by a protection grid being provided, the two cylinders being integrally coupled each other by a shaft inserted within two sealed through holes provided on the faced walls of the two tanks, the shaft centrally providing a bigger diameter disc contacting the rear wheel or flywheel.

Preferably, according to the invention, each one of the two tanks provides a liquid return chute.

It is further specific object of the present invention a bicycle or like, provided with at least one seat coupled with a supporting rod, characterised in that said at least one seat is a swinging seat having a foot pivoted on the head of the supporting rod, the foot being shaped in such a way to provide two surfaces interacting with two mating surfaces of a head projection to limit the rotation with respect to the supporting rod head, elastic means being connected with the seat and the supporting rod.

Always according to the invention, said at least one swinging seat can also comprise a front bodice to support the user bust, said bodice being provided with elastically swinging means.

Still according to the invention, the front bodice can provide a rod, pivoted on the head of the supporting rod and/or on the foot of the seat by said elastically swinging means.

Furthermore, according to the invention, said elastically swinging means can be provided with adjustable friction means able to vary the elastic resistance of the supporting rod opposed by the front bodice to the weight of the supported bust.

Always according to the invention, said at least one swinging seat can provide sliding means to adjust the seat along the longitudinal direction of the bicycle and/or telescopic means to adjust the height and the longitudinal inclination of the seat and/or articulation means to adjust the transverse inclination of the seat.

Still according to the invention, said at least one swinging seat can provide a rear equaliser to support the user bust, said equaliser being provided with elastically swinging means

Furthermore, according to the invention, the rear equaliser can be connected with the seat and/or with the supporting rod by elastically swinging means.

Preferably, according to the invention, said elastically swinging means provide quick release means

Always according to the invention, said elastically swinging means can provide adjustable friction means capable to vary the elastic resistance opposed by the equaliser to the user bust.

The present invention will be now described, for illustrative but not limitative purposes, according to its preferred embodiments, with particular reference to the figures of the enclosed drawings, wherein:
figure 1 shows an exploded view of the pedal group of a first embodiment of the bicycle according to the invention;
figure 2 shows an exploded view of a portion of the pedal group of a second embodiment of the bicycle according to the invention;
figure 3 shows a lateral view of a bicycle according to the invention;
figure 4a shows a partial, right side perspective view of the bicycle of figure 3, schematically representing the lower limbs of a user;
figure 4b schematically shows the lower limbs of the user of figure 4a;
figure 5 shows a left lateral view of another bicycle according to the invention;
figure 6 shows a right lateral view of a bicycle according to the invention obtained combining the solutions shown in figures 1, 3 and 5;
figure 7 shows a right lateral view of a bicycle according to the invention obtained combining the solutions shown in figures 2, 3 and 5;
figure 8 shows a right lateral view of a third embodiment of a bicycle according to the invention;
figure 9 shows a rear view of the bicycle of figure 8;
figure 10 shows a right lateral view of a fourth embodiment of a bicycle according to the invention;
figure 11 shows a right lateral view of another embodiment of a bicycle according to the invention;
figure 12 shows a right lateral view of a further embodiment of a bicycle according to the invention; and
figure 13 shows a right lateral view of the seat of another embodiment of a bicycle according to the invention

In the following of the description same references shall be used to indicate same elements in the Figures

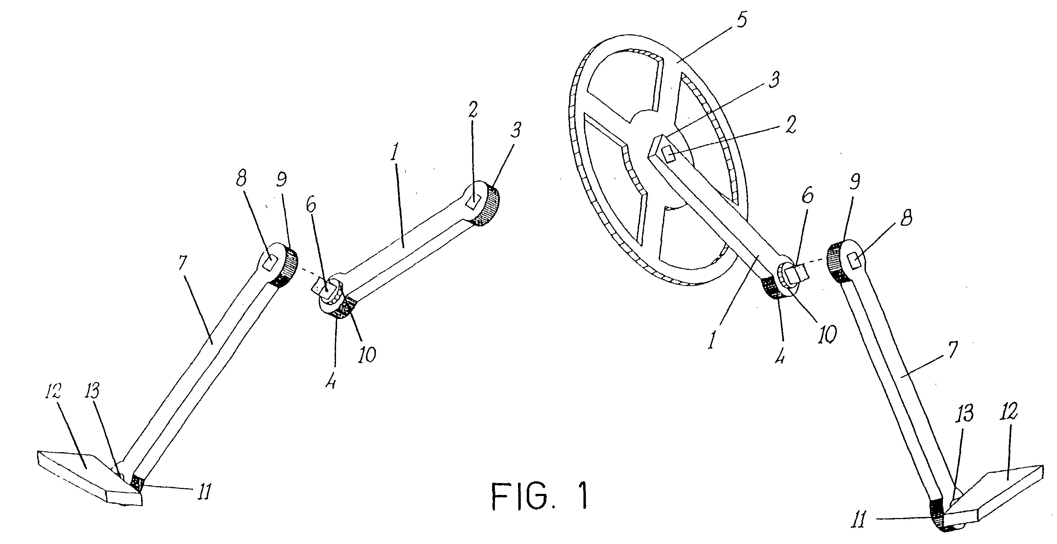

With reference to Figure 1, a first embodiment of the bicycle according to the invention provides that the pedal group comprises a left crank and a right crank 1, both coupled, through shaped holes 2 on the ends 3, with the two ends of the central shaft, not shown. With reference to the distance from the shaft, the ends 3 shall be in the following indicated as proximal ends of the cranks 1, while the opposite ends 4 shall be indicated as distal ends. A gear wheel 5 is also integrally coupled with the central shaft near the right end. Each one of the two cranks 1 provides that a shaped pin 6, provided with a ring gear 10, is rotatably coupled with the distal end 4.

The pedal group in Figure 1 further comprises a left pedal crank and a right pedal crank 7 provided with shaped holes 8 on the ends 9. The shaped hole 8 of each one of the two pedal cranks 7 is integrally coupled with the pin 6 of the corresponding crank 1 so as to accomplish a freewheel like mechanism between the crank 1 and the corresponding pedal crank 7. With reference to the distance from the corresponding pin 6. the ends 9 shall be in the following indicated as proximal ends of the pedal cranks 7, while the opposite ends 11 shall be indicated as distal ends. Each one of the two pedal cranks 7 provides that a pedal 12 is coupled with the distal end 11; for instance, the coupling between pedal cranks 7 and pedals 12 may be accomplished through screws, not shown, inserted into threaded through holes 13, placed at the distal ends 11 of the pedal cranks 7, and into corresponding through holes, preferably axial (not shown), of the pedals 12.

The freewheel like mechanism between the cranks 1 and the corresponding pedal cranks 7, accomplished through the integral coupling between the shaped pins 6, provided with the ring gears 10 comprising a plurality of bearings and unidirectional rotating gears, and the shaped holes 8 enables the integral coupling between crank 1 and corresponding pedal crank 7 only during the pedalling active phase, or thrust phase, while during the passive phase, or user's limb reloading phase, the pedal crank 7 is free to rotate in direction opposite to the rotation direction of the corresponding crank 1, allowing the user's foot resting on the pedal 12, coupled with the pedal crank 7, to describe a reduced counter-gravity path. Consequently, the counter-gravity work carried out by the limbs during the pedalling passive phase is hugely reduced, resulting in a high increase of the biomechanical efficiency of the users action

It is plain that those skilled in the art may easily modify the coupling between cranks 1 and pedal cranks 7 and/or the position of the ring gears 10 for accomplishing the same freewheel like mechanism between the cranks 1 and the corresponding pedal cranks 7, still remaining within the scope of the present invention.

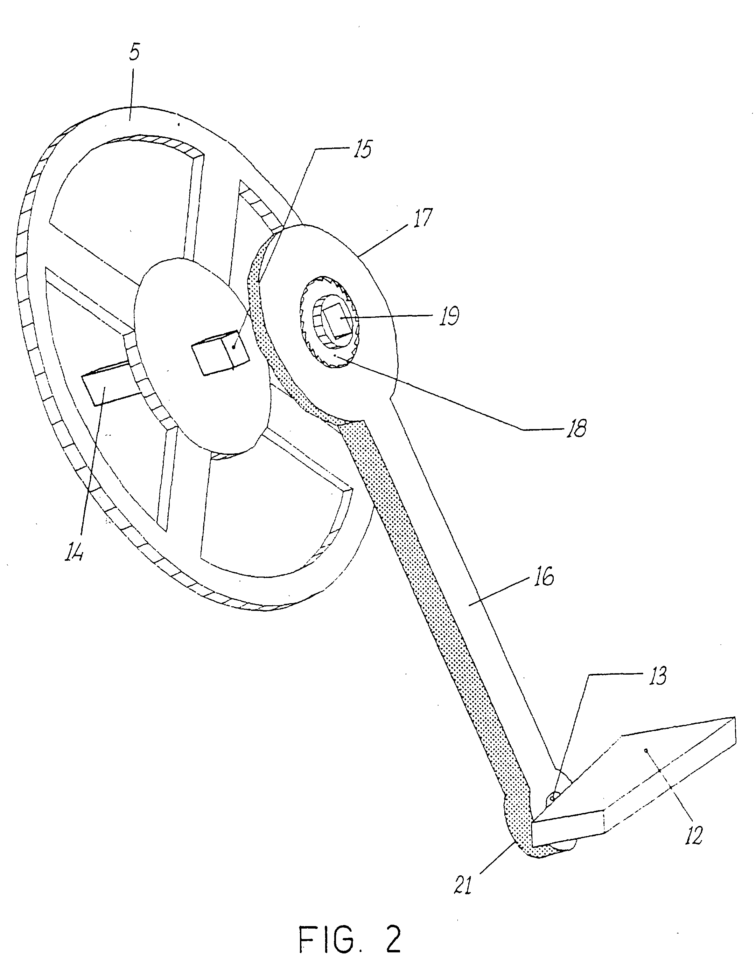

With reference to Figure 2, a second embodiment of the bicycle according to the invention provides that the pedal group comprises a central shaft 14 with which a gear wheel 5 is integrally coupled near the right end 15 (in Figure). The pedal group also comprises two cranks, of which only the right crank 16 is shown; since the cranks are identical, in the following reference shall be made only to the right crank 16, similar considerations being valid also for the left crank. The right crank 16 provides at one end 17 a gear 18 rotatably coupled with the crank itself and provided with a shaped hole 19 into which the right end 15 of the central shaft 14 is inserted for the coupling of the gear 18 with it. The gear 18 is such as to accomplish a freewheel like mechanism between the crank 16 and the central shaft 14.

The right crank 16 provides that a pedal 12 is coupled with the other end, for instance through a screw, not shown, inserted into a threaded through holes 13 and into a corresponding through hole, preferably axial (not shown), of the pedal 12.

The freewheel like mechanism between the right crank 16 and the left one and the central shaft 14 enables the integral coupling between crank 16 and central shaft 14 only during the pedalling thrust phase, while during the user's limb reloading phase the crank 16 is free to rotate in direction opposite to the rotation direction of the central shaft 14, allowing the user's foot resting on the pedal 12 to describe a pendulum path which hugely reduces the counter-gravity work carried out by the limbs during the pedalling passive phase. Therefore, this involves a high increase of the biomechanical efficiency of the user's action.

It is plain that those skilled in the art may easily modify the coupling between cranks 16 and central shaft 14 and/or the position of the gears 18 for accomplishing the same freewheel like mechanism, still remaining within the scope of the present invention.

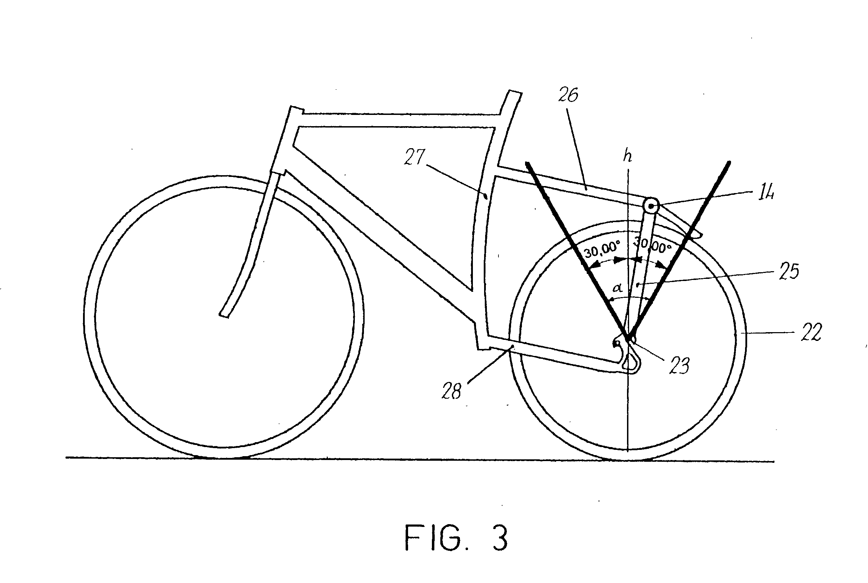

With reference to Figure 3, a mobile two-wheel bicycle according to the invention provides that the pedal group is placed outside the circumference of the rear wheel 22 in proximity to the perpendicular *h* to the ground going through the hub 23 of the rear wheel 22. More precisely, the central shaft 14 of the pedal group, set parallel to the hub 23 to the ground going through the hub 23 of the rear wheel 22. More precisely, the central shaft 14 of the pedal group, set parallel to the hub 23 of the rear wheel 22, is placed externally, above, with respect to the circumference of said rear wheel 22, within an angular range α of ± 30° with respect to the line h going through the contact point between wheel 22 and the ground and through the hub 23 of the wheel.

In the case of fixed bicycles, as cyclettes, for which no rear wheel 22 is provided, the central shaft 14 of the pedal group is placed in an equivalent position, for example outside a rear flywheel.

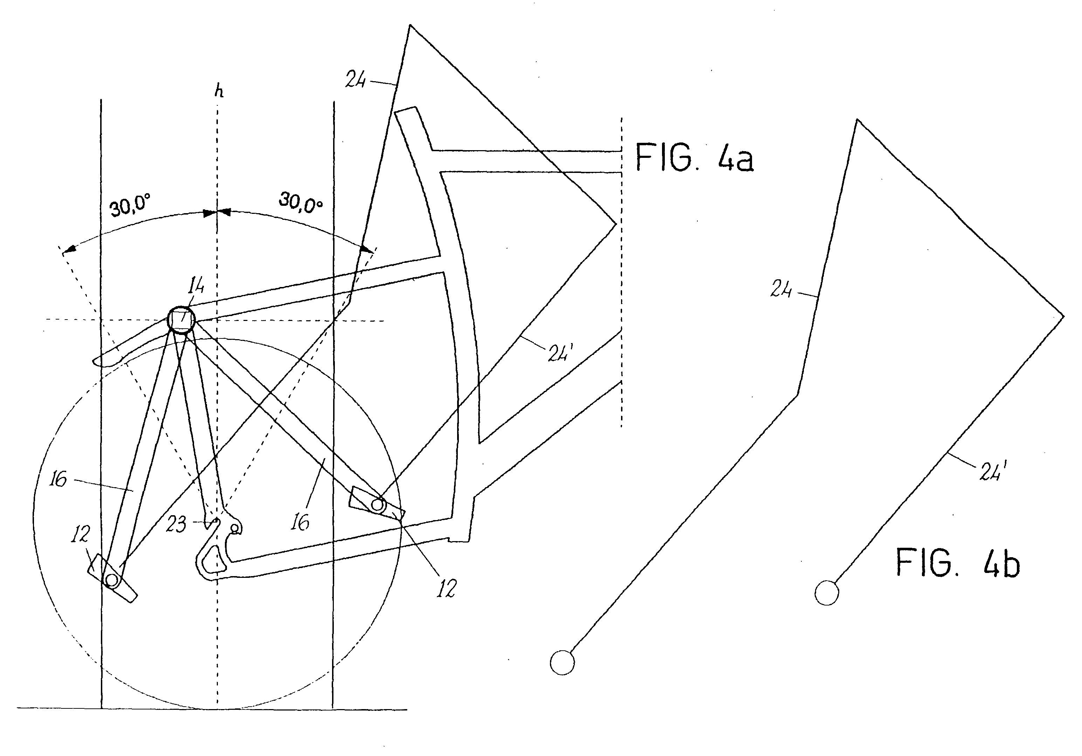

Observing Figure 4a, which shows a part of the bicycle of Figure 3 viewed from the opposite side and having the pedal group with pendulum cranks of Figure 2, it is plain that such position of the pedal group allows all muscles of the lower limbs 24 and 24' to be better used since, as it is better shown in Figure 4b, the limbs 24 and 24' may be completely stretched during the pedalling active phase, generating a higher muscular power than the one generated in traditional bicycles. Moreover, the position of the pedal group promotes the balancing of the user's weight and the stabilisation of the whole propulsive part of the bicycle, comprising the rear wheel 22 and the pedal group, due to the reduction of the side movement of the pedals; particularly, the stability of the bicycle is furthermore increased with the increasing of speed, due to the effective gyroscopic effect resulting from the shown position of the pedal group. Also, such position of the pedal group allows the user to assume a particularly aerodynamic posture.

It is plain that such advantages are obtained even when the pedal group applied to the bicycle of Figure 4a is the one with cranks and pedal cranks of Figure 1.

As it is shown in Figure 3, the frame of the bicycle provides that the hub 23 of the rear wheel 22 is connected to the central shaft 14 of the pedal group through a first rod 25 which promotes the stabilisation of the propulsive part of the bicycle.

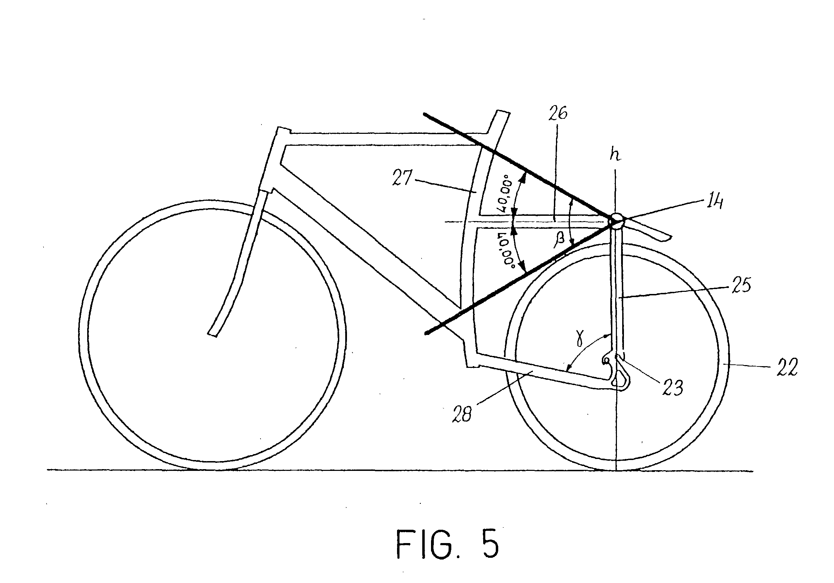

In another bicycle according to the invention, as better shown in Figure 5, the frame also provides a second rod 26 connecting the central shaft 14 of the pedal group with the rod 27 supporting the seat, not shown. Such second rod 26 is placed within an angular range β of ± 40°with respect to a line parallel to the ground and going through the central shaft 14 of the pedal group. Moreover, the frame provides a further rod 28 is preferably comprised within 60° and 120°. Such configuration of the frame enables the bicycle stability to be further increased, minimising the torsional stress of the central shaft 14 of the pedal group.

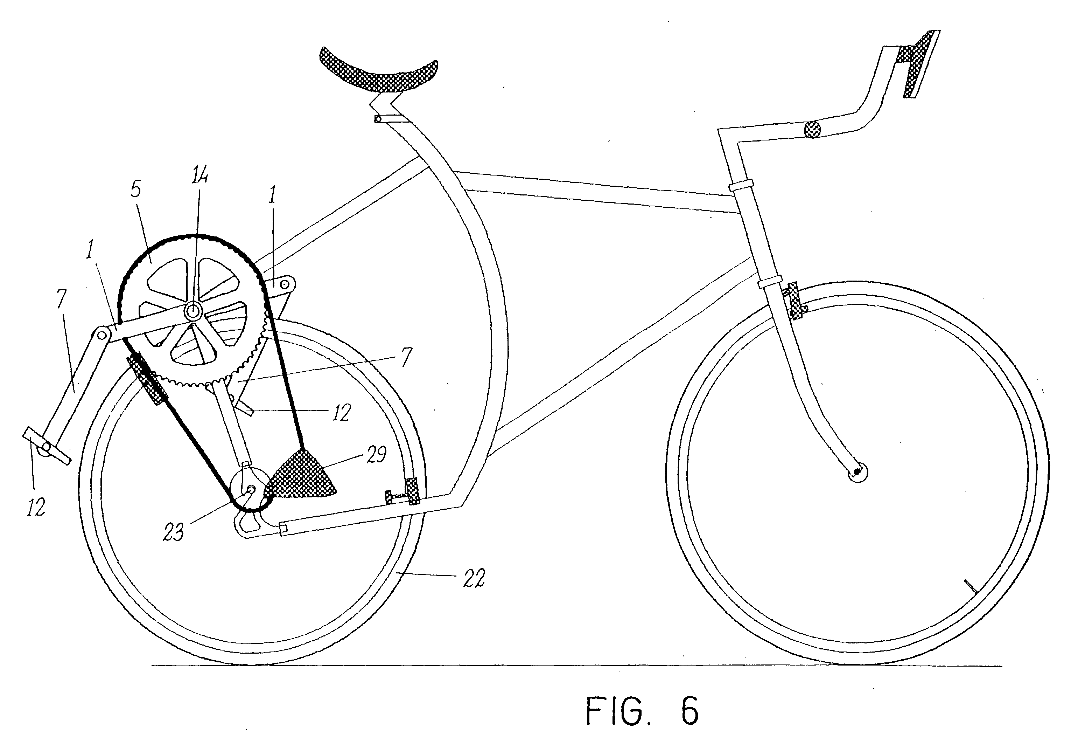

For instance, in Figure 6 a mobile bicycle is shown comprising the pedal group with cranks and pedal cranks of Figure 1, a speed gear 29 and the solutions proposed for the frame and shown in Figures 3 and 5.

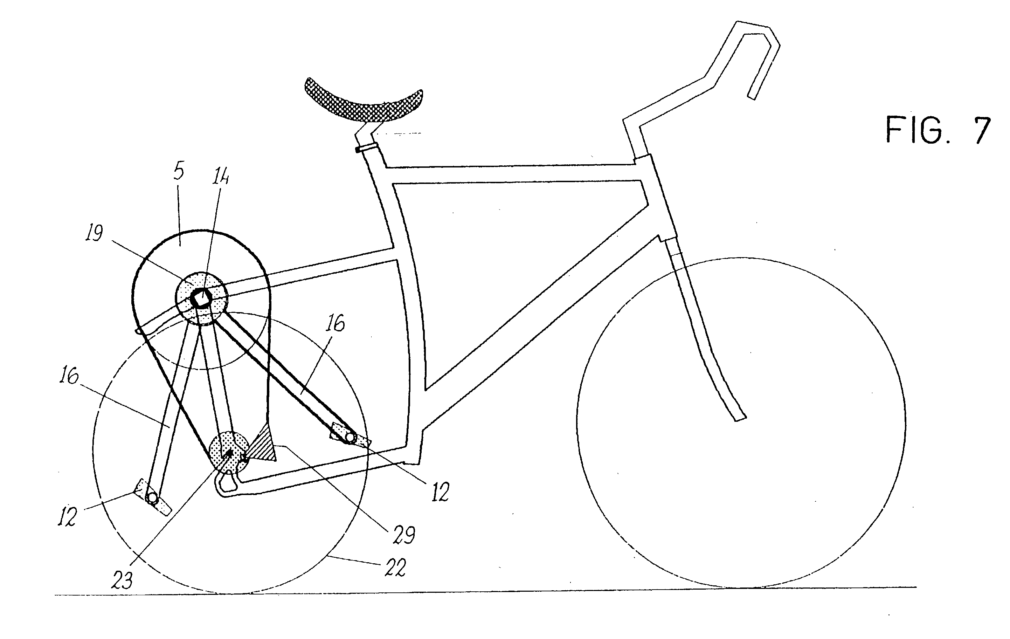

Similarly, in Figure 7 a mobile bicycle is shown comprising the pedal group with pendulum cranks of Figure 2, a speed gear 29 and the solutions proposed for the frame in Figures 3 and 5.

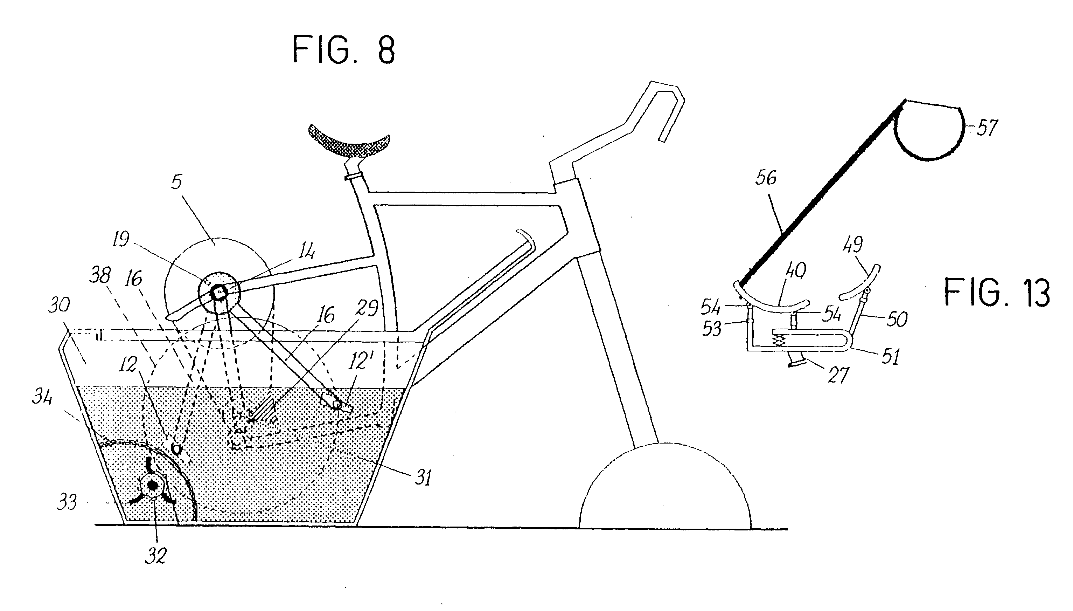

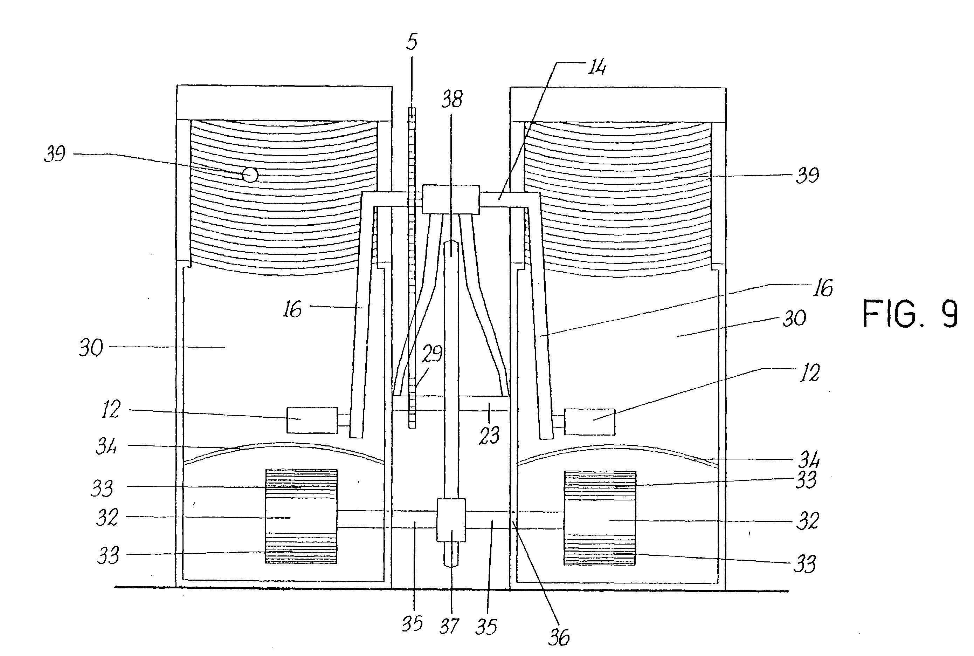

With reference to Figures 8 and 9, a third embodiment of the bicycle according to the invention provides that the bicycle is fixed, provides the pedal group with pendulum cranks 16 of Figure 2, a speed gear 29, the solutions proposed for the frame in Figures 3 and 5 and also comprises two tanks 30, suitable to contain water and/or therapeutical liquids 31, within each of them a pedal 12 being submerged for promoting an efficient hydromassage effect for the user's lower limbs during pedalling. Further embodiments may provide the pedal group with cranks and pedal cranks of Figure 1, still remaining within the scope of the present invention.

Within each of the two tanks 30 is provided a cylinder 32 provided with shaped blades 33 and protected by a protection grid 34. The two cylinders 32 are integrally coupled each other by a shaft 35 inserted into two wet seal through holes 36 provided on the facing walls of the two tanks 30. The shaft 35 centrally provides a disc 37 having a bigger diameter and interfering with the rear wheel or flywheel 38. Particularly, during the operation of the pedal group, through contact with the disc 37, the rear wheel or flywheel 38 transmits a rotatory motion to the two cylinders 32 the shaped blades 33 of which dash the water or therapeutical liquid 31 upwardly toward the user's lower limbs, enhancing the hydromassage effect. Each one of the two tanks 30 provides a chute 39 for the drainage of liquid 31.

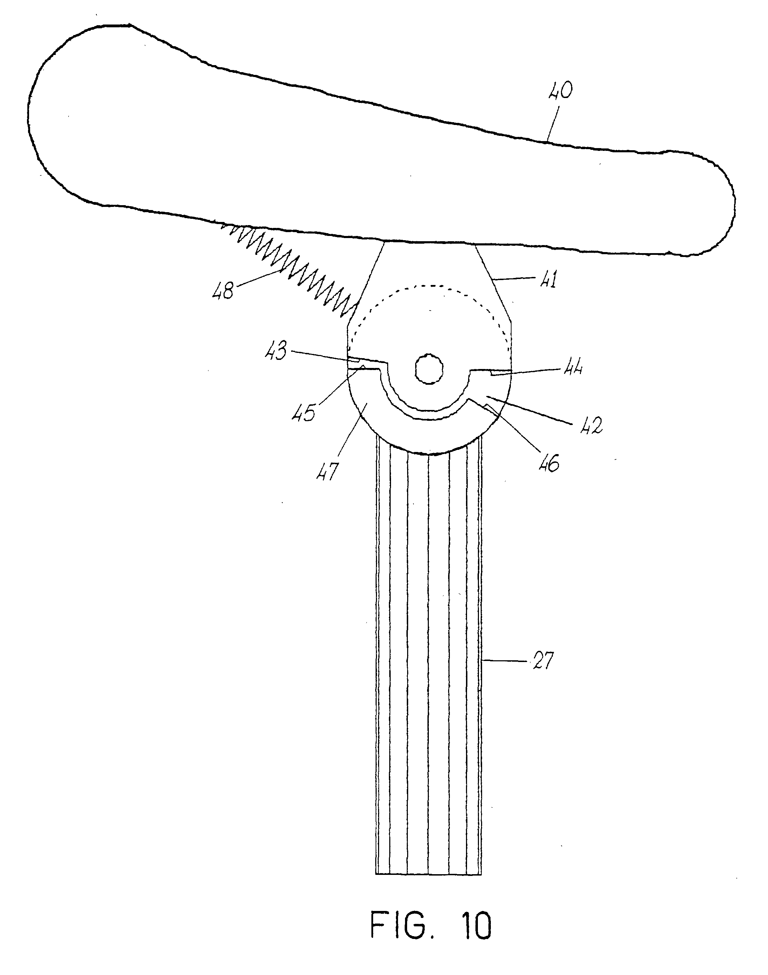

With reference to Figure 10, a forth embodiment of the bicycle according to the invention provides a swinging seat 40 having a variable inclination on the supporting rod 27. Particularly, the seat 40 provides a foot 41 pivoted on the head 42 of the supporting rod 27; the foot 41 is suitably shaped for providing two surfaces 43 and 44 interfering with two mating surfaces 45 and 46 of a projection 47 of the head 42 to limit the rotation of the foot 41 on the head 42. A spring 48, connected to the seat 40 and to the head 42 of the supporting rod 27, offers elastic resistance to the swinging of the seat itself.

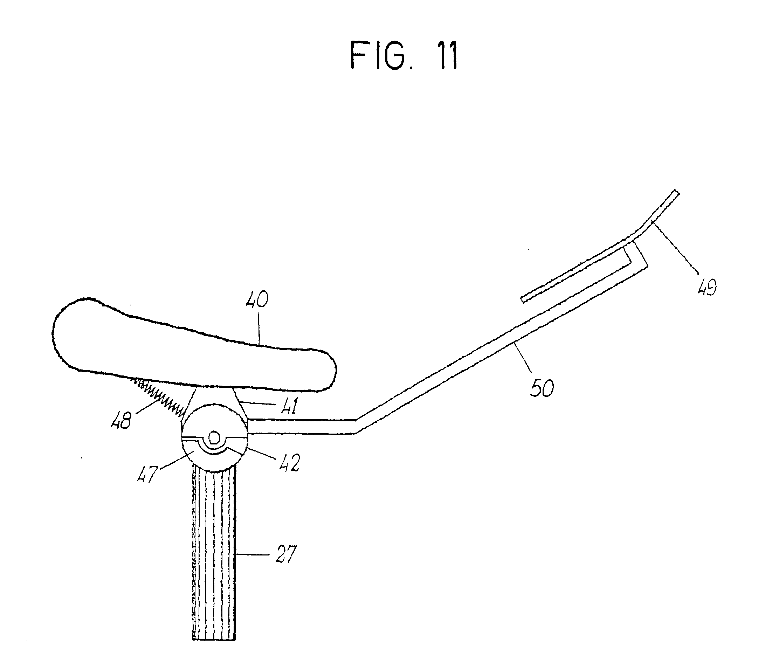

With reference to Figure 11, another bicycle according to the invention provides that the balancing seat 40 also comprises a front bodice 49, for supporting the user's bust, connected to the seat 40 through a rod 50 pivoted on the head 42 of the supporting rod 27 or on the foot 41 of the seat 40 through elastically swinging means, not shown, provided with adjustable friction means, also not shown, able to change the elastic resistance offered by the front bodice 49 to the weight of the supported bust. The front bodice 49 is anatomically shaped and padded with soft stuff.

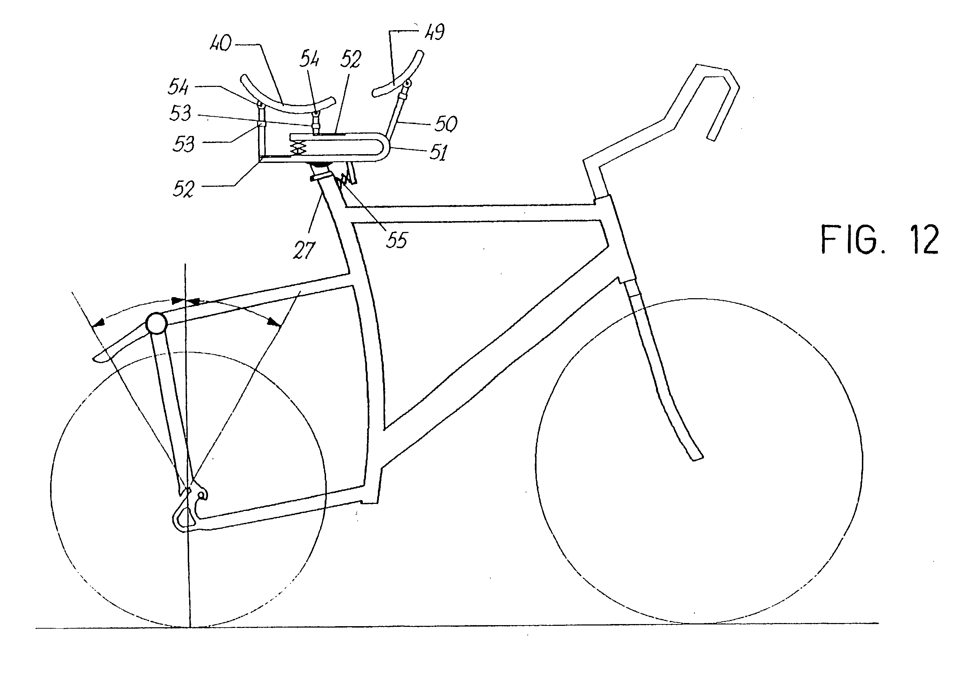

With reference to Figure 12, the foot 41 of the seat 40 of a further bicycle according to the invention may provide an upper element 51, preferably made up of an U-shaped bent plate having unequal arms extending substantially parallel to ground, provided with sliding means 52, for adjusting the seat 40 along the longitudinal direction, with telescopic means 53, for adjusting the seat 40 in height and longitudinal slope, and with articulation means 54, for adjusting the seat 40 in transversal slope. The upper element 51 is also connected through an elastic spring 55 to the supporting rod 27 of the seat 40.

With reference to Figure 13, the seat 40 of another bicycle according to the invention may provide a rear equaliser 56, for supporting the user's bust, connected to the seat 40 or to the supporting rod 27 through quick release elastically swinging means, not shown, provided with adjustable friction means, also not shown, able to change the elastic resistance offered by the equaliser 56 to the weight of the supported bust. The rear equaliser 56 is provided with bust supporting means 57 and may furnish an efficient protection when falls occur.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Bicycle and like, having a rear wheel (22) or flywheel, and provided with a pedal group comprising a central shaft and a gear wheel (5) integrally coupled each other, a left crank (1) and a right crank (1), coupled on the two ends of the central shaft, **characterised in that** a pedal crank (7) is rotatably coupled with each one of said left and right cranks (1) by mechanical means (6, 8, 10) creating a freewheel like mechanism between the crank (1) and the corresponding pedal crank (7), a pedal (12) being coupled with one end of each one of the two pedal cranks (7).

2. Bicycle and like according to claim 1, **characterised in that** said rotating coupling mechanical means between the crank (1) and the corresponding pedal crank (7) comprises a shaped pin (6), provided with a ring gear (10) and rotatably coupled with the crank (1) or with the pedal crank (7), said pin (6) coupling with a corresponding shaped hole (8) provided in the pedal crank (7) or in the crank (1).

3. Bicycle and like, having a rear wheel (22) or flywheel, and provided with a pedal group comprising a central shaft (14) and a gear wheel (5) integrally coupled each other, a left crank (16) and a right crank (16), a pedal (12) being coupled with one end of each one of the two pedal cranks (16), **characterised in that** said left crank (16) and right crank (16) are rotatably coupled with the central shaft (14) by mechanical means (15, 16, 19) creating a freewheel like mechanism between each crank (16) and the central shah (14).

4. Bicycle and like according to claim 3, **characterised in that** said rotating coupling mechanical means between each one of the cranks (16) and the central shaft (14) comprises a gear (18) coupled with the crank (16), or to the end (15) of the central shaft (14), and provided with a shaped hole (19) within which the corresponding end (15) of the central shaft (14), or a corresponding crank (16) pin, is inserted.

5. Bicycle and like according to each one of the preceding claims 1 - 4, **characterised in that** the central shaft (14) of the pedal group, which is placed parallel with respect to rear wheel (22) hub (23), is provided externally, above, with respect to the circumference of said rear wheel (22), within an angular range (α) of ± 30° with respect to the line (h) passing through the contact point between the wheel (22) and the ground and through the hub (23).

6. Bicycle and like according to claim 5, **characterised in that** the rear wheel (23) or flywheel hub is connected with the central shaft (14) of the pedal group by at least a rod (25).

7. Bicycle and like according to claim 5 or 6, **characterised in that** it provides at least a further rod (26) connecting the central shaft (14) of the pedal group with a seat supporting rod (27), said at least a further rod (26) being included within an angular range (β) of ± 40° with respect to a line parallel to the ground and passing through the central shaft (14) of the pedal group.

8. Bicycle and like according to any one of the preceding claims 5 - 7, **characterised in that** it provides at least a further rod (28) connecting the rear wheel (22) or flywheel hub (23) with the lower end of the seat supporting rod (27), the angle (γ) between said at least a further rod (28) and the line (h) perpendicular to the ground and passing through the rear wheel (22) or flywheel hub (23) being between 60 and 120°.

9. Bicycle and like according to any one of the preceding claims, **characterised in that** it is a fixed bicycle comprising two tanks (30), suitable to contain liquid (31), within each of them a pedal (12) of the pedal group being submerged, within each of the two tanks (30) a cylinder (32) provided with shaped blades (33) and protected by a protection grid (34) being provided, the two cylinders (32) being integrally coupled each other by a shaft (35) inserted within two sealed through holes (36) provided on the faced walls of the two tanks (30), the shaft (35) centrally providing a bigger diameter disc (37) contacting the rear wheel or flywheel (38).

10. Bicycle and like according to claim 9, **characterised in that** each one of the two tanks (30) provides a liquid (31) return chute (39).

11. Bicycle and like according to any one of the preceding claims, provided with at least one seat coupled with a supporting rod (27), **characterised in that** said at least one seat is a swinging seat (40) having a foot (41) pivoted on the head (42) of the seat supporting rod (27), the foot (41) being shaped in such a way to provide two surfaces (43, 44) interacting with two mating surfaces (45, 46) of a head (42) projection (47) to limit the foot rotation with respect to the supporting rod (27) head (42), elastic means (48, 55) being connected with the seat (40) and the supporting rod (27).

12. Bicycle and like according to claim 12, **characterised in that** said at least one swinging seat (40) comprises a front bodice (49) to support the user bust, said bodice (49) being provided with elastically swinging means.

13. Bicycle and like according to claim 13, **characterised in that** the front bodice (49) provides a rod (50), pivoted on the head (42) of the supporting rod (27) and/or on the foot (41) of the seat (40) by said elastically swinging means.

14. Bicycle and like according to claim 13 or 14, **characterised in that** said elastically swinging means are provided with adjustable friction means able to vary the elastic resistance opposed by the front bodice (49) to the weight of the supported bust.

15. Bicycle and like according to each one of the preceding claims 12 - 15, **characterised in that** said at least one swinging seat (40) provides sliding means (52) to adjust the seat (40) along the longitudinal direction of the bicycle and/or telescopic means (53) to adjust the height and the longitudinal inclination of the seat (40) and/or articulation means (54) to adjust the transverse inclination of the seat (40).

16. Bicycle and like according to each one of the preceding claims 12 - 15, **characterised in that** said at least one swinging seat (40) provides a rear equaliser (56) to support the user bust, said equaliser (56) being provided with elastically swinging means.

17. Bicycle and like according to claim 17, **characterised in that** the rear equaliser (56) is connected with the seat (40) and/or with the supporting rod (27) by elastically swinging means.

18. Bicycle and like according to claim 17 or 18, **characterised in that** said elastically swinging means provide quick release means.

19. Bicycle and like according to each one of the preceding claims 17 - 19, **characterised in that** said elastically swinging means provide adjustable friction means capable to vary the elastic resistance opposed by the equaliser (56) to the user bust.

## Patentansprüche

1. Fahrrad oder dergleichen, mit einem Hinterrad (22) oder Schwungrad und einer aus einer Hauptwelle und einem daran vollständig angekuppelten Zahnrad (5) bestehenden Pedalanordnung, mit einer Linkskurbel (1) und einer Rechstkurbel (1), die an die beiden Enden der Hauptwelle angekuppelt sind, **dadurch gekennzeichnet, dass** eine Pedalkurbel (7) mit jeder der vorgenannten Links - und Rechtskurbel (1) durch mechanische Mittel (6,8,10) drehbar verbunden ist, wodurch zwischen der Kurbel (1) und der entsprechenden Pedalkurbel (7) ein scwungradähnliches Getriebe gebildet wird, wobei ein Pedal (12) mit einem Ende einer jeden Pedalkurbel (7) gekuppelt ist.

2. Fahrrad oder dergleichen nach Ansprunch 1, **dadurch gekennzeichnet, dass** die vorgenannten drehbaren mechanischen Kupplungsmittel zwischen der Kurbel (1) und der entsprechenden Pedalkurbel (7) einem Profilbolzen (6) aufweisen, der mit einer ringförmigen Verzahnung (10) versehen und mit der Kurbel (1) oder mit der Pedalkurbel (7) drehbar verbunden ist, wobei der vorgenannte Bolzen in eine entsprechend geformte, in der Pedalkurbel oder in der Kurbel (1) vorgesehene Öffnung eingreift.

3. Fahrrad oder dergleichen, mit einem Hinterrad (22) oder Schwungrad und einer aus einer Hauptwelle (14) und einem daran vollständig angekuppelten Zahnrad (5) bestehenden Pedalanordnung, mit einer Linkskurbel (1) und einer Rechtskurbel (1), wobei ein Pedal (12) an ein Ende einer jeden der beiden Pedalkurbel (16) angekuppelt ist, **dadurch gekennzeichnet, dass** die vorgenannte Linkskurbel (16) end Rechtskurbel (18) mit der Hauptwelle (14) durch mechanische Mittel (15,16,19) verbunden sind, wodurch ein schwungradähnliches Getriebe zwischen jeder Kurbel (16) und der Hauptwelle (14) gebildet wird.

4. Fahrrad oder dergleichen nach Ansprunch 3, **dadurch gekennzeichnet, dass** die vorgenannten drehbaren mechanischen Kupplungsmittel, zwischen einer jeden der Kurbel (16) und der Hauptwelle, (14) ein an die Kurbel (16) oder an das Ende der Hauptwelle (14) angekuppettes und eine Profilöffnung aufweisendes Zahnrad (18) enthalten, wobei in diese Profilöffnung ein entsprechendes Ende (15) der Hauptwelle (14) oder ein entsprechender Bolzen der Kurbel (16) eingestecket ist.

5. Fahrrad oder dergleichen nach je einem der vorhergehenden Ansprüche 1 bis 4, **dadurch gekennzeichnet, dass** die Hauptwelle (14) der Pedalanordnung, die parallel zur Nabe (23) des Hinterades (22) angeordnet ist, sich oberhalb und ausserhalb des Umfangskreises des Hinterrades (22) innerhalb eines Winkelbereiches (α) von ± 30° zur durch den Kontaktpunkt zwischen dem Rad (22) und dem Boden und durch die Nabe (23) durchgehenden Linie befindet.

6. Fahrrad oder dergleichen nach Ansprunch 5, **dadurch gekennzeichnet, dass** das Hinterrad (22) bzw. Schwungrad durch mindesten eine Stange (25) mit der Hauptwelle (14) der Pedalanordnung verbunden ist.

7. Fahrrad oder dergleichen nach Ansprunch 5 oder 6, **dadurch gekennzeichnet, dass** mindestens eine weitere, die Hauptwelle (14) der Pedalanordung mit einem den Sattel tragenden Stab (27) verbindende Stange (26) vorgesehen ist, wobei diese mindestens eine weitere Stange (26) innerhalb eines Winkelbereiches (β) von ± 40° einer zum Boden parallelen und durch die Hauptwelle (14) der Pedalanordnung durchgehenden Linie angeordnet ist.

8. Fahrrad oder dergleichen nach je einem der vorhergehenden Ansprüche, **dadurch gekennzeichnet, dass** mindestens eine weitere, die Nabe (23) des Hintererrades (22) oder Schwungrades mit dem unteren Ende des den Sitz tragenden Stabes (27) verbindende Stange (28) vorgeschen ist, wobei der Winkel zwischen der vorgenannten mindestens einer weiteren Stange (28) und der zum Boden senkrechten und durch die Nabe des Hinterrades (22) oder Schwungrades durchgehenden Limie in einem Winkelbereich von 60° bis 120° liegt.

9. Fahrrad oder dergleichen nach je einem der vorhergehenden Ansprüche, **dadurch gekennzeichnet, dass** das Fahrrad ein ortfestes Fahrrad ist, welches zwei eine Flüssigkeit (31) enthaltlbare Behälter (30), in der ein Pedal (12) der Pedalanordung eingetaucht ist und innerhalb eines jeden Behälters (30) ein mit Profilflügeln (33) versehenerund durch einen Schutzgitter (34) geschützter Zylinder (32) angeordnet ist, wobei die beiden Zylinder (32) miteinander durch eine Welle (35) verbunden sind, die innerhalb einer gedichteten, in den gegenüberstehenden Wänden der beiden Zylinder (30) vorgesehenen Durchgangsöffnung angeordnet ist und wobei die Welle (35) mittig eine einem grösseren Durchmesser aufweisende Scheibe (37) trägt, die mit dem Hinterrad bzw Schwungrad (38) in Berührung steht.

10. Fahrrad oder dergleichen nach Anspruch 9, **dadurch gekennzeichnet, dass** jede der beiden Behälter (30) mit einer Schrägebene (39) zur Rückführung der Flüssigkeit (31) versehen ist.

11. Fahrrad oder dergleichen nach je einem der vorhergehenden Ansprüche, das mit mindestens einem durch den Tragestab (27) getragen Sattel versehen ist, **dadurch gekennzeichnet, dass** mindestens ein Sattel ein Schwingsattel (40) mit einem an den Kopf (42) des Setteltragstabes (27) angelenkten Bein (41) ist, wobei das Bein (41) so gebildet is, dass es zwei mit zwei entsprechenden Flächen (45,46) eines Vorsprunges (47) des Stabkopfes (42) mitarbeitende Flächen (43,44) aufweist, um die Schwingung des Beines gegenüber dem Kopf (42) des Satteltragstabes (27) zu beschränken, wobei Federmittel (48,55) mit dem Sattel (40) und dem Tragstab (27) verbunden sind.

12. Fahrrad oder dergleichen nach Ansprunch 11, dadurch gekennseichnet, dass mindestens ein Schwingsattel (40) ein Stirnleibchen zur Abstüzung des Oberleibes (49) eines Benutzers aufweist, wobei das vorgenannte Stirnleibehen (49) mit schwingbaren Federmitteln versehen ist.

13. Fahrrad oder dergleichen nach Anspruch 12, **dadurch gekennzeichnet, dass** das Stirnleibchen (49) eine an den Kopf (42) des Tragstabes (27) und/oder an das Bein (41) des Sattels (40) durch die vorgenannten schwingbaren Federmittel angelenkte Stange (50) aufweist.

14. Fahrrad oder dergleichen nach Anspruch 12 oder 13, **dadurch gekennzeichnet, dass** die vorgenannten elastischen Schwingmittel mit einstellbaren Reibungsmitteln versehen sind, welche den durch das Stirnleibehen (49) gegen das Gewicht des abgestützten Rumpfs ausgeübten elastischen Widerstand zu ändern gestatten.

15. Fahrrad oder dergleichen nach je einem der vorhergehenden Ansprüche 11 bis 14, **dadurch gekennzeichnet, dass** der vorgenannte mindestens ein Schwingsattel (40) Gleitmittel (52) zur Einstellung des Sattels (40) in der Längsrichtung des Fahrrads und/oder teleskopische Mittel zur Einstellung der Höhe und der Längsneigung des Sattels (40) und/oder Gelenkmittel zur Einsteilung der Querneigung des Sattels (40) aufweist.

16. Fahrrad oder dergleichen nach je einem der vorhergehenden Ansprüche 12 bis 15, **dadurch gekennzeichnet, dass** der vorgenannte mindestens ein Schwingsattel (40) einen hinteren Ausgleicher (56) zur Abstützung des Rumpfes des Gebrauchers aufweist, wobei der genannte Ausgleicher (56) mit schwingbaren Federmitteln versehen ist.

17. Fahrrad oder dergleichen nach Ansprunch 16, **dadurch gekennzeichnet, dass** der hintere Ausgleicher (56) durch schwingbare Federmittel mit dem Sattel (40) und/oder mit dem Tragstab (27) verbunden ist.

18. Fahrrad oder dergleichen nach ansprunch 16 oder 17, **dadurch gekennzeichnet, dass** die vorgenannten schwingbaren Federmittel schnellwirkende Auslösemittel haben.

19. Fahrrad oder dergleichen nach je einem der vorhergehenden Ansprüche 16 bis 18, **dadurch gekennzeichnet, dass** die vorgenannten schwingbaren Federmittel einstellbare Reibungsmittel aufweisen, welche den durch den Ausgleicher (56) gegen den Rumpf des Gebrauchers ausgeübten elastischen Winderstand zu ändern gestatten.

## Revendications

1. Bicyclette ou similaire, ayant une roue postérieure (22) ou volant et un ensemble de pédales comprenant un arbre central et une roue dentée (5) integrallement joints l'un avec l'autre, une manivelle droite (1) et une manivelle gauche (1) jointes avec les deux extrémités de l'arbre central, **caractérisée en ce que** une manivelle de pédale (7) est jointe à rotation avec chaque desdites pédales gauche et droite (1) par des moyens mécanique (6,8,10), engendrant ainsi un mécanisme semblable à volant entre la manivelle (1) et la correspondente manivelle de pédale (7), une pédale (12) étant jointe avec une extrémité de chacune des deux manivelle de pédale (7).

2. Bicyclette ou similaire selon la revendication 1, **caractérisée en ce que** lesdits moyens mécaniques d'accouplement pivotants entre la minivelle (1) et la correspondante manivelle de pédale (7) comprendent un goujon façoné (6) muni d'un engranage annulaire (10) et joint à rotation avec la manivelle ou avec la manivelle de pédale (7), ledit goujon (6) etant joint avec un correspondant trou façoné (8), pratiqué dans la manivelle de pedal ou dans la manivelle (1).

3. Bicyclette ou similaire, ayant une roue postérieure (22) ou volant et un ensemble de pédales comprenat un arbre central (14) et une roue dentée (5) integrallement joints l'un avec l'autre, une manivelle gauche (16) et une manivelle droite (16), une pédale (12) étant jointe avec une extrémité de chacune desdites deux manivelles de pédale (16), **caractérisée en ce que** ladite manivell gauche (16) et ladite manivelle droite (16) soint jointes à rotation avec l'arbre central (14) par des moyens mecaniques (15,18,19), engendrant ainsi un mécanisme semblable à volant entre chaque manivelle (16) et l'arbre central (14).

4. Bicyclette ou similaire selon la revendication 3, **caractérisée en ce que** lesdit moyens mécaniques d'accouplement pivotants entre chacune des manivelles (16) et l'arbre central (14) comprendent un engranage (18) joint avec la manivelle (16) ou avec l'extrémite de l'arbre central (14) et muni d'un trou façoné (19), dans lequel est introduite l'extrémité correspondante de l'arbre central ou un correspondant goujon de la manivelle (16).

5. Bicyclette ou similaire selon une quelconque des revendications précédentes 1 à 4, **caracterisé en ce que** l'arbre central (14) de l'ensamble de pédales, qui est placé parallelement au moyen (23) de la roue postérieure (22), extérieurement et au dessus de la circonferénce de ladite roue postérieure (22), entre un domaine des angles (α) de ± 30° par rapport à la ligne (h) passante à travers le point de contact entre la roue (22) et le sol et à travers le moyeau (23).

6. Bicyclette ou similaire selon la revendication 5, **caracterisé en ce que** le moyeau de la roue posterieure (23) ou de volant est joint à l'arbre central (14) de l'ensamble de pédales par au moins une tige (25).

7. Bicyclette ou similaire selon les revendications 5 ou 6, **caracterisés en ce que** au moins une autre tige (26) est prévue pour joindre l'arbre central (14) de l'ensamble de pédales à une tige (27) de support d'une selle, ladite au moins une autre tige (26) étant placée dans un demaine des angles (β) de ± 40° par rapport à une ligne parallele au sol et passant à travers l'arbre central (14) de l'ensamble de pédales.

8. Bicyclette ou similaire selon une quelconque des revendications précédentes, **caracterisée en ce que** au moins une autre tige (28) est prévue pour joindre le moyen (23) de la roue postérieure ou de volant à l'extrémité inférieure de la tige de support (27) de la selle, l'angle (Y) entre ladite au moins une autre tige (28) et la ligne (h) perpendiculaire au sol et passante à travers le moyeau de postérieure ou de volant étant entre 60° et 120°.

9. Bicyclette ou similaire selon une quelconque des revendications précédentes, **caracterisée en ce qu'**elle est une bicyclette fixe comprenat deux récipients (30) pour contenir un liquide (31), dans chacun desquels une pédale (12) de l'ensamble de pédales est plongée, dans chacun des deux récipients (30) étant placé un cylindre (32) muni de deux ailettes et protégé par une grille de protection (34), les deux cylindres (32) étant integralement joints entre eux par un arbre (35) inséré dans deux trous passants étanches (36) pratiqués dans les parois opposées des deux récipients (35), l'arbre (35) ayant à son centre un disque (37) de diamètre plus grand, qui est à contact avec la roue postérieure ou volant (38).

10. Bicyclette ou similaire selon la revendication 9, **caractérisée en ce que** les deux récipients (30) ont une pente de retour (39) du liquide (31).

11. Bicyclette ou similaire selon une quelconque des revendications précédentes, munie d'un moins une selle jointe à une tige de support (27), **caractérisée en ce que** ladite au moins une selle est une selle pivotante (40) ayant une anse (41) articulée a la tête (42) de la tige (27) de support de la selle, l'anse (41) étant formée de façon à rèaliser deux surfaces (43,44) coopérantes avec deux surfaces correspondantes (45,46) d'une saillie (47) de la tête (42), des moyens élastiques (48,55) étant joints à la selle (40) et à la tige de support (27).

12. Bicyclette et similaire selon la revendication 11, **caractérisée en ce que** au moins une selle pivotante (40) comprend un corset frontal (49) pour supporter le buste de l'usager, ledit corset (49) étant muni de moyens pivotants élastiquement.

13. Bicyclette et similaire selon la revendication 12, **caractérisée en ce que** le corset frontal (49) a une tige (50) articulée à la tête (42) de la tige de support (27) et/ou à l'anse (41) de la selle (40) par lesdits moyens élastiquement pivotants.

14. Bicyclette et similaire selon la revendication 12 ou 13, **caractérisée en ce que** lesdits moyens élastiquement pivotants sont muni de moyens de friction réglables, capables de changer la résistence élastique opposée par le corset frontal (49) à le poids du buste supporté.

15. Bicyclette et similaire selon une quelconque des revendications précédentes, **caractérisée en ce que** ladite au moins une selle (40) a des moyens de glissement (52) pour régler la selle (40) le long de la direction longitudinale de le bicyclette et/ou des moyens télescopiques pour régler l'hanteur et l'inclinaison longitudinale de la selle (40) et/ou des moyens d'articulation (54) pour régler l'inclinaison trasversale de la selle (40).

16. Bicyclette et similaire selon une quelconque des revendications précédentes, **caractérisée en ce que** ladite au moins une selle pivotante (40) est muni d'un équilibrateur postérieur (56) pour supporter le buste de l'usager, ledit équilibrateur étant muni de moyens élastiquement pivotants.

17. Bicyclette ou similaire selon la revendication 16, **caractérisée en ce que** l'équilibrateur postérieur (56) est joint à la selle (40) et/ou à la tige de support (27) par de moyens élastiquement pivotants.

18. Bicyclette et similaire selon la revendication 16 ou 17, **caractérisée en ce que** lesdits moyens élastiquement pivotants ont des moyens de dégagement rapide.

19. Bicyclette ou similaire selon une quelconque des revendications précédentes 16 à 18, **caractérisée en ce que** lesdits moyens élastiquement pivotants ont des moyens de friction réglable capable de changer la résistance élastique opposée par l'équilibrateur (56) au buste de l'usager.
